# EUROPÄISCHE PATENTSCHRIFT

(11) **EP 2 291 455 B1**
(45) Veröffentlichungstag und Bekanntmachung des Hinweises auf die Patenterteilung: **09.04.2014**
(21) Anmeldenummer: 09765855.3
(22) Anmeldetag: 17.06.2009
(51) Int. Cl.: C08L 67/02, C08J 3/24

(54) **ADDITIVE FÜR POLYMERBLENDS**
ADDITIVES FOR POLYMER BLENDS
ADDITIFS POUR MÉLANGES POLYMÈRES

(30) Priorität: 18.06.2008 EP 08158453
(43) Veröffentlichungstag der Anmeldung: 09.03.2011
(73) Patentinhaber: BASF SE, 67056 Ludwigshafen (DE)
(72) Erfinder: ALTHOEFER, Henning, 67157 Wachenheim (DE); LOOS, Robert, 68165 Mannheim (DE)
(86) Internationale Anmeldenummer: PCT/EP2009/057504
(87) Internationale Veröffentlichungsnummer: WO 2009/153275

(56) Entgegenhaltungen:
- WO-A1-92/19680
- WO-A1-94/01468
- WO-A1-96/19348
- US-A1- 2004 033 242
- DATABASE WPI Week 197714 Thomson Scientific, London, GB; AN 1977-24393Y XP002546694 & JP 52 024254 A (MITSUBISHI CHEM IND LTD) 23. Februar 1977 (1977-02-23)

## Beschreibung

Die vorliegende Erfindung betrifft ein Polymerblend, enthaltend wenigstens ein hydrophobes Polymer als Komponente A, wenigstens ein hydrophiles Polymer als Komponente B und wenigstens eine die Komponente A und/oder B vernetzende Struktureinheit, abgeleitet von wenigstens einer Verbindung ausgewählt aus der Gruppe bestehend aus Aldehyden, Dialdehyden, Diketonen, Aldehydketonen, Derivaten der genannten Verbindungen und Mischungen davon, als Komponente C, Verfahren zur Herstellung dieser Polymerblends, Bauteile, Folien oder Filme enthaltend ein solches Polymerblend, die Verwendung eines solchen Polymerblends zur Herstellung von Bauteilen, Folien oder Filmen, sowie die Verwendung von wenigstens einer Verbindung ausgewählt aus der Gruppe bestehend aus Aldehyden, Dialdehyden, Diketonen, Aldehydketonen, Derivaten der genannten Verbindungen und Mischungen davon zur Herstellung von Polymerblends enthaltend wenigstens ein hydrophobes Polymer und wenigstens ein hydrophiles Polymer.

Insbesondere betrifft die vorliegende Erfindung bioabbaubare/biokompatible Polymerblends sowie ein Verfahren zu deren Herstellung. Bioabbaubare bzw. biokompatible Polymere und Polymerblends sind aus dem Stand der Technik bereits bekannt.

US 5,322,866 offenbart ein Verfahren zur Herstellung von bioabbaubaren Stärkebasierten Produkten, wobei unbehandelte Stärke mit bioabbaubaren Copolymeren wie Polyvinylalkohol oder -Ethylen-Vinylalkohol, einem Weichmacher sowie einem Befeuchter vermischt werden. Ein geeigneter Weichmacher ist Glycerin. Weitere geeignete Additive sind Talkum oder Stearate, beispielsweise Calcium- oder Zink-Stearate. Die bioabbaubaren Polymerblends gemäß US 5,322,866 werden durch Coextrusion der geschmolzenen Komponenten hergestellt.

US 6,096,809 offenbart biologisch abbaubare Polymermischungen enthaltend wenigstens ein Stärke-Biopolymer, einen Weichmacher und ein Polymer ausgewählt aus aromatischen Polyestern, Polyester-Copolymeren mit sowohl aliphatischen als auch aromatischen Blöcken, Polyesteramiden, Polyglycol, Polyester-Urethanen und Mischungen davon. Neben den genannten Polymeren können in der Mischung gemäß US 6,096,809 Weichmacher, Stabilisatoren, Antiflamm-Reagenzien und gegebenenfalls weitere biologisch abbaubare Polymere enthalten sein. Um die Eigenschaften des hydrophilen Polymers zu reduzieren, ist es gemäß diesem Dokument möglich, quervernetzende Verbindungen, beispielsweise Alkylketendimere, zuzugeben.

US 5,346,936 offenbart eine bioabbaubare einphasige Stärke/Polymer-Mischung umfassend chemisch modifizierte Stärke, Emulgiermittel, Weichmacher oder destrukturierende Verbindungen und wenigstens ein lineares Polymer. Die verwendbaren Weichmacher sind organische Verbindungen, die wenigstens eine Hydroxy-Gruppe aufweisen, beispielsweise Glycerin, Sorbitol, Mannitol, D-Glucose, Ethylenglycol, Polyethylenglycol, Propylenglycol und Mischungen davon. Geeignete Emulgiermittel sind Metallstearate, Glycerolmonostearate, Polyoxyethylensorbitanmonolaurate, Polyoxyethylenmonopalmitate, Polyoxyethylenstearate und Mischungen davon. Weitere geeignete Additive sind optische Aufheller, Stabilisatoren, Antioxidantien, Flammschutz-Reagenzien, Farbstoffe, Füllstoffe und Additive, die die Verarbeitbarkeit während des Herstellungsverfahrens erhöhen.

US 5,374,304 offenbart bioabbaubare, klare, transparente und flexible Kunststoffe auf Basis von Amylose, die zusätzlich einen Weichmacher enthalten. Als Weichmacher geeignete Verbindungen sind Glycerin, Diethylenglycol, Triethylenglycol, Sorbitol, Polyvinylalkohol, Citronensäure-Addukte und Mischungen davon.

EP 1 263 859 A1 offenbart Folien und Beschichtungen, die eine Mischung aus einem Polymer ausgewählt aus aliphatischen Polyestern, beispielsweise Poly-Milchsäure oder Polycaprolacton, Stärke und Bienenwachs bzw. Montanesterwachs enthalten. Die Mischung gemäß EP 1 263 859 A1 kann des Weiteren Additive ausgewählt aus Fettsäureamiden, Talkum, Neutralisationsmitteln, Stabilisatoren oder Farbstoffen enthalten.

R. F. Storey et al., Polymer 35 (4), 830 bis 838, 1994, und P. Bruin et al., Makromolekulare Chemie 9, 589 - 594, 1998, offenbaren abbaubare Polyurethane, basierend auf D,L-Milchsäure, Glucose, ε-Caprolacton und Trimethylencarbonat-Homopolyestern, die mit Toluol-2,6-diisocyanat (TDI) quervernetzt sind.

WO 92/19680 offenbart bioabbaubare polymere Zusammensetzungen, basierend auf Stärke und thermoplastischen Polymeren. Die polymere Komponente gemäß WO 92/19680 umfasst Polymere von Hydroxysäuren oder Mischungen dieser Polymere mit Polymeren erhalten durch Umsetzung ethylenisch ungesättigter Monomere, insbesondere Polymere von Ethylen-Vinylalkohol oder Polyvinylalkohol. Die genannten Polymere basieren durchweg auf Hydroxy-Carbonsäuren, d. h. bifunktionellen Verbindungen, die sowohl eine Carbonsäure- als auch eine Hydroxyfunktionalität enthalten. Die genannten Copolymere können auch in Kombination mit einem oder mehreren Polymeren oder Copolymeren erhältlich aus ethylenisch ungesättigten Monomeren vorliegen.

Stärke enthaltende Polymerblends weisen eine unerwünschte hohe Wasseraufnahmefähigkeit auf, die den Einsatz bei der Folienherstellung zum Beispiel für den Verpackungsbereich, erschwert. Des Weiteren sind die mechanischen Eigenschaften von Polymermischungen enthaltend Stärke unzureichend. Die Zugabe von beispielsweise Polyestern zu solchen Mischungen, um die mechanische Stabilität zu erhöhen, hat einen negativen Einfluss auf die Kosten eines entsprechenden bioabbaubaren Polymergemisches. Die Verwendung von Diisocyanaten, um Stärke-Polymer-Blends zu vernetzen, führt zu Produkten, die aufgrund der Anwesenheit von Diisocyanaten eine erhöhte Toxizität aufweisen, so dass diese für eine Verwendung im Lebensmittelbereich ausscheiden. Des Weiteren ist die durch Diisocyanate hervorgerufene Quervernetzung nur schwer spaltbar, so dass die Bioabbaubarkeit solcher Produkte nicht ausreichend ist.

Aufgabe der vorliegenden Erfindung gegenüber dem genannten Stand der Technik ist es somit, Polymerblends enthaltend hydrophile und hydrophobe Polymere bereitzustellen, die bioabbaubar sind, die ausreichende mechanische Eigenschaften zur Verwendung beispielsweise als Verpackungen oder Tüten und eine geringe Toxizität aufweisen. Des Weiteren soll ein Verfahren zur Herstellung dieser Polymerblends bereitgestellt werden, welches einfach und kostengünstig mit bereits vorhandenen Vorrichtungen durchgeführt werden kann.

Diese Aufgaben werden gelöst durch ein Polymerblend, enthaltend
(a) wenigstens ein hydrophobes Polymer aus Komponente A, ausgewählt aus der Gruppe bestehend aus Homopolyestern und/oder Copolyestern aus aliphatischen Dicarbonsäuren oder aromatischen Dicarbonsäuren mit einem aliphatischen Diol oder Diolgemisch mit 2 bis 18 C-Atomen,
(b) wenigstens ein hydrophiles Polymer als Komponente B, ausgewählt aus der Gruppe bestehend aus Stärke, Cellulose, Polyvinylalkohol, Proteinen, Poly(meth)acrylamiden, Polysacchariden und Mischungen davon und
(c) wenigstens eine die Komponente A und/oder B vernetzende Struktureinheit, abgeleitet von wenigstens einer Verbindung ausgewählt aus der Gruppe bestehend aus Aldehyden, Dialdehyden, Diketonen, Aldehydketonen, Derivaten der genannten Verbindungen und Mischungen davon, als Komponente C.

Die Aufgaben werden des Weiteren gelöst durch ein Verfahren zur Herstellung von erfindungsgemäßen Polymerblends, umfassend die Schritte
(A) Mischen von wenigstens einem hydrophoben Polymer als Komponente A, ausgewählt aus der Gruppe bestehend aus Homopolyestern und/oder Copolyestern aus aliphatischen Dicarbonsäuren oder aromatischen Dicarbonsäuren mit einem aliphatischen Diol oder Diolgemisch mit 2 bis 18 C-Atomen mit wenigstens einem hydrophilen Polymer als Komponente B, ausgewählt aus der Gruppe bestehend aus Stärke, Cellulose, Polyvinylalkohol, Proteinen, Poly(meth)acrylamiden, Polysacchariden und Mischungen davon, um ein Polymerblend zu erhalten und
(B) Mischen des in Schritt (A) erhaltenen Polymerblends mit einer Verbindung ausgewählt aus der Gruppe bestehend aus Aldehyden, Dialdehyden, Diketonen, Aldehyd-Ketonen, Derivaten der genannten Verbindungen und Mischungen davon als Komponente D und Umsetzung, um ein Polymerblend zu erhalten.

Die Aufgaben werden des Weiteren gelöst durch ein Verfahren zur Herstellung von erfindungsgemäßen Polymerblends, umfassend die Schritte
(C) Mischen von wenigstens einem hydrophilen Polymer als Komponente B, ausgewählt aus der Gruppe bestehend aus Stärke, Cellulose, Polyvinylalkohol, Proteinen, Poly(meth)acrylamiden, Polysacchariden und Mischungen davon, mit einer Verbindung ausgewählt aus der Gruppe bestehend aus Aldehyden, Dialdehyden, Diketonen, Aldehydketonen, Derivaten der genannten Verbindungen und Mischungen davon und Umsetzung, um ein modifiziertes Polymer zu erhalten, und
(D) Mischen des in Schritt (C) erhaltenen modifizierten Polymers mit wenigstens einem hydrophoben Polymer A, ausgewählt aus der Gruppe bestehend aus Homopolyestern und/oder Copolyestern zu aliphatischen Dicarbonsäuren oder aromatischen Dicarbonsäuren mit einem aliphatischen Diol oder Diolgemisch mit 2 bis 18 C-Atomen, um ein Polymerblend zu erhalten.

Die Aufgaben werden des Weiteren durch Bauteile, Folien oder Filme enthaltend das genannte Polymerblend, bzw. durch die Verwendung dieses Polymerblends zur Herstellung von Bauteilen, Folien oder Filmen und die Verwendung von wenigstens einer Verbindung ausgewählt aus der Gruppe bestehend aus Aldehyden, Dialdehyden, Diketonen, Aldehydketonen, Derivaten der genannten Verbindungen und Mischungen davon, zur Herstellung von Polymerblends, enthaltend wenigstens ein hydrophobes Polymer als Komponente A, ausgewählt aus der Gruppe bestehend aus Homopolyestern und/oder Copolyestern aus aliphatischen Dicarbonsäuren oder aromatischen Dicarbonsäuren mit einem aliphatischen Diol oder Diolgemisch mit 2 bis 18 C-Atomen und wenigstens ein hydrophiles Polymer als Komponente B, ausgewählt aus der Gruppe bestehend aus Stärke, Cellulose, Polyvinylalkohol, Proteinen, Poly(meth)acrylamiden, Polysacchariden und Mischungen davon, wobei Komponente A und/oder B vernetzt werden, gelöst.

Das erfindungsgemäße Polymerblend enthält als Komponente A wenigstens ein hydrophobes Polymer ausgewählt aus der oben genannten Gruppe.

"Hydrophob" und "Hydrophil" bedeutet im Rahmen der vorliegenden Erfindung, dass sich die verschiedenen Polymere relativ hydrophober bzw. hydrophiler zueinander verhalten, d.h. dass sie sich in ihrer Hydrophilie unterscheiden.

Polyester und Verfahren zu deren Herstellung sind dem Fachmann bekannt. Aus der Stoffklasse der Polyester sind Homopolyester und/oder Copolyester aus aliphatischen Dicarbonsäuren oder aromatischen Dicarbonsäuren wie Oxalsäure, Malonsäure, Bernsteinsäure, Glutarsäure, Adipinsäure, Pimelinsäure, Korksäure, Azelainsäure, Sebacinsäure, Nonandicarbonsäure, Decandicarbonsäure, Undecandisäure, Dodecandisäure, Terephthalsäure, Isophthalsäure mit einem aliphatischen Diol oder Diolgemisch mit 2 bis 18 C-Atomen wie Ethylenglykol, 1,3-Propandiol, 1,2-Propandiol, 1,4-Butandiol, 1,5-Pentandiol, 1,6-Hexandiol geeignet. Besonders bevorzugt sind biologisch abbaubare Homo- oder Copolyester ausgewählt aus der Gruppe bestehend aus aliphatischen Dicarbonsäuren und aliphatischen Diolen und teilaromatische Polyester.

Unter biologisch abbaubaren teilaromatischen Polyestern sollen erfindungsgemäß auch Polyesterderivate verstanden werden wie Polyetherester, Polyesteramide oder Polyetheresteramide. Zu den geeigneten biologisch abbaubaren teilaromatischen Polyestern gehören lineare nicht kettenverlängerte Polyester (WO 92/09654). Bevorzugt werden kettenverlängerte und/oder verzweigte teilaromatische Polyester. Letztere sind aus den eingangs genannten Schriften, WO 96/15173 bis 15176, 21689 bis 21692, 25446, 25448 oder der WO 98/12242, bekannt, auf die ausdrücklich Bezug genommen wird. Mischungen unterschiedlicher teilaromatischer Polyester kommen ebenso in Betracht. Insbesondere sind unter teilaromatischen Polyestern Produkte wie Ecoflex^{®} (BASF Aktiengesellschaft) und Eastar^{®} Bio (Novamont) zu verstehen.

Die bevorzugten teilaromatischen Polyester sind charakterisiert durch ein Molekulargewicht (Mₙ) im Bereich von 1000 bis 100000, insbesondere im Bereich von 9000 bis 75000 g/mol, bevorzugt im Bereich von 10000 bis 50000 g/mol und einem Schmelzpunkt im Bereich von 60 bis 170, bevorzugt im Bereich von 80 bis 150°C.

"Biologisch abbaubar" ist für einen Stoff oder ein Stoffgemisch dann erfüllt, wenn dieser Stoff oder das Stoffgemisch in mindestens einem der drei in DIN V 54900-2 (Vornorm, Stand September 1998) definierten Verfahren einen prozentualen Grad des biologischen Abbaus von mindestens 60% aufweist.

Im Allgemeinen führt die biologische Abbaubarkeit dazu, dass die Polyester(mischungen) in einer angemessenen und nachweisbaren Zeitspanne zerfallen. Der Abbau kann enzymatisch, hydrolytisch, oxidativ und/oder durch Einwirkung elektromagnetischer Strahlung, beispielsweise UV-Strahlung, erfolgen und meist zum überwiegenden Teil durch die Einwirkung von Mikroorganismen wie Bakterien, Hefen, Pilzen und Algen bewirkt werden. Die biologische Abbaubarkeit lässt sich beispielsweise dadurch quantifizieren, dass Polyester mit Kompost gemischt und für eine bestimmte Zeit gelagert werden. Beispielsweise wird gemäß DIN EN 13432 oder DIN V 54900-2, Verfahren 3, CO₂-freie Luft durch gereiften Kompost während des Kompostierens strömen gelassen und dieser einem definierten Temperaturprogramm unterworfen. Hierbei wird die biologische Abbaubarkeit über das Verhältnis der Netto-CO₂-Freisetzung der Probe (nach Abzug der CO₂-Freisetzung durch den Kompost ohne Probe) zur maximalen CO₂-Freisetzung der Probe (berechnet aus dem Kohlenstoffgehalt der Probe) als prozentualer Grad des biologischen Abbaus definiert. Biologisch abbaubare Polyester(mischungen) zeigen in der Regel schon nach wenigen Tagen der Kompostierung deutliche Abbauerscheinungen wie Pilzbewuchs, Riss- und Lochbildung.

Andere Methoden zur Bestimmung der Bioabbaubarkeit werden beispielsweise in ASTM D 5338 und ASTM D 6400 beschrieben.

Homo- bzw. Copolyester können durch Polykondensation von Diolen und Dicarbonsäuren, gegebenenfalls unter Säurekatalyse und/oder gleichzeitiger Entfernung des entstehenden Reaktionswassers, nach dem Fachmann bekannten Verfahren hergestellt werden.

Als Komponente B enthält das erfindungsgemäße Polymerblend wenigstens ein hydrophiles Polymer, ausgewählt aus der Gruppe bestehend aus Stärke, Cellulose, Polyvinylalkohol, Proteinen, Poly(meth)acrylamiden, Polysacchariden und Mischungen davon.

Erfindungsgemäß können als Stärke solche polymeren Verbindungen unterschiedlicher Herkunft oder Zusammensetzung eingesetzt werden. Der Ausdruck "Stärke" umfasst erfindungsgemäß beispielsweise Polysaccharide natürlichen, pflanzlichen Ursprungs, die bevorzugt aus Amylose und/oder Amylopectin aufgebaut sind. Erfindungsgemäß einsetzbare Stärke kann beispielsweise aus verschiedenen Pflanzen, beispielsweise Kartoffeln, Reis, Tapioka, Mais, Erbsen oder Getreide wie beispielsweise Weizen, Hafer oder Roggen, gewonnen werden. Geeignete Verfahren dazu sind dem Fachmann bekannt. Bevorzugt wird erfindungsgemäß Stärke verwendet, die aus Kartoffeln, Mais, Weizen und/oder Reis hergestellt wird. Mischungen von Stärken unterschiedlichen Ursprungs können ebenfalls eingesetzt werden. Die Stärke kann als native, d. h. in hydratisierter Form, oder als getrocknete Stärke eingesetzt werden.

Als Komponente B können des Weiteren auch thermoplastisch verarbeitbare Stärken eingesetzt werden, beispielsweise Stärken, die Seitenketten aufweisen, beispielsweise lineare oder verzweigte C₁-C₁₂-Alkyl- und/oder Arylketten, die über Ether- oder EsterGruppen an die freien Hydroxygruppen der Stärke angebunden sind.

Als Komponente C enthält das erfindungsgemäße Polymerblend wenigstens eine Komponente A und/oder B vernetzende Struktureinheit, abgeleitet von wenigstens einer Verbindung, ausgewählt aus der Gruppe bestehend aus Aldehyden, Dialdehyden, Diketonen, Aldehydketonen, Derivaten der genannten Verbindungen und Mischungen davon.

Als Komponente C können Aldehyde eingesetzt werden. Geeignete Beispiele sind ausgewählt aus der Gruppe bestehend aus Formaldehyd, Ethanal, Propanal, Butanale, Pentanale und Mischungen davon.

Die als Komponente C vorliegenden vernetzenden Struktureinheiten, die in dem erfindungsgemäßen Polymerblend vorliegen, leiten sich bevorzugt von Verbindungen ab, die wenigstens zwei Aldehyd-Gruppen, wenigstens zwei Keto-Gruppen oder wenigstens eine Aldehyd- und wenigstens eine Keto-Gruppe aufweisen.

Die vernetzenden Struktureinheiten C vernetzen in dem erfindungsgemäßen Polymerblend im Allgemeinen die Komponente A untereinander, die Komponente B untereinander und/oder die Komponente A und die Komponente B miteinander. Bevorzugt wird die Komponente B untereinander vernetzt.

Die vernetzenden Struktureinheiten resultieren bevorzugt aus der Reaktion der genannten Aldehyd- und/oder Keto-Gruppen mit den freien Hydroxy- oder Amidgruppen der als Komponente B vorliegenden hydrophilen Polymere. Reaktion der Aldehyd- und/oder Keto-Gruppen mit den Hydroxy-Gruppen des wenigstens einen hydrophilen Polymer (Komponente B) resultiert in der Bildung von Acetal-Gruppen. Da die den vernetzenden Struktureinheiten zugrunde liegenden Verbindungen bevorzugt wenigstens zwei funktionelle Gruppen aufweisen, erfolgt durch Reaktion dieser wenigstens zwei funktionellen Gruppen mit dem hydrophilen Polymer die Quervemetzung des wenigstens einen hydrophilen Polymers (Komponente B). Die vernetzenden Struktureinheiten (Komponente C) entsprechen somit den ihnen zugrunde liegenden Verbindungen, wobei die bevorzugt vorliegenden Aldehyd- oder Ketogruppen in Acetalgruppen bzw. Aminoacetalgruppen umgewandelt sind. Der Grad der Vernetzung kann durch die Menge an den vernetzenden Struktureinheiten zugrunde liegenden Verbindungen eingestellt werden.

In einer bevorzugten Ausführungsform leitet sich Komponente C des erfindungsgemäßen Polymerblends von Dialdehyden, Diketonen, Aldehydketonen der allgemeinen Formel (I) oder Mischungen davon ab 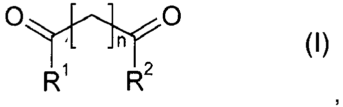
- worin R¹ und R²: unabhängig voneinander Wasserstoff, C₁-C₈-Alkyl, C₂-C₈-Alkenyl, C₂-C₈-Alkinyl, C₆-C₂₂-Aryl, C₆-C₂₂-Heteroaryl, C₆-C₂₂-Alkylaryl, C₆-C₂₂-Alkylheteroaryl und
- n: 0 bis 12 bedeuten.

In einer bevorzugten Ausführungsform sind R¹ und R² unabhängig voneinander Wasserstoff oder C₁-C₈-Alkyl, besonders bevorzugt unabhängig voneinander ausgewählt aus Wasserstoff, Methyl, Ethyl, Propyl oder Butyl, insbesondere bevorzugt unabhängig voneinander Wasserstoff oder Methyl. In einer weiteren bevorzugten Ausführungsform ist n 0, 1, 2, 3, 4, 5 oder 6, besonders bevorzugt 0, 1, 2 oder 3, ganz besonders bevorzugt 0 oder 3.

In einer ganz besonders bevorzugten Ausführungsform leitet sich Komponente C von Glyoxal (II) (R¹ und R² sind Wasserstoff, n ist 0), Methylglyoxal (III) (R¹ ist Methyl, R² ist Wasserstoff und n ist 0), Glutaraldehyd (IV) (R¹ und R² sind Wasserstoff, n ist 3) oder einer Mischung davon ab.

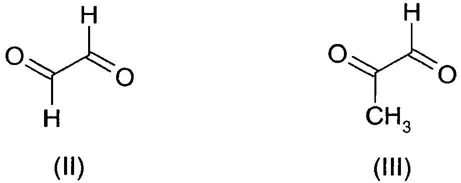

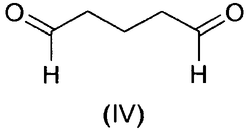

Erfindungsgemäß ist es auch möglich, dass sich die als Komponente C vorliegende vernetzende Struktureinheit von Derivaten der vorgenannten Verbindungen, insbesondere der Dialdehyde, Diketone und/oder Aldehydketone, ableitet. Geeignete Derivate sind beispielsweise Acetale, insbesondere Voll- und Halbacetale, die durch Reaktion der entsprechenden Aldehyd- oder Keto-Gruppen in den Verbindungen mit einem ein- oder mehrwertigen Alkohol umgesetzt werden, wobei mehrwertige Alkohole cyclische Halb- bzw. Vollacetale bilden.

Geeignete einwertige Alkohole sind beispielsweise aliphatische Alkohole mit ein bis zehn Kohlenstoffatomen, beispielsweise Methanol, Ethanol, Propanol, iso-Propanol und/oder n-Propanol, Butanol, n-Butanol, iso-Butanol und/oder tert.-Butanol, Pentanol, Hexanol und Mischungen davon.

Geeignete mehrwertige Alkohole sind beispielsweise ausgewählt aus der Gruppe bestehend aus Verbindungen der allgemeinen Formel (V) 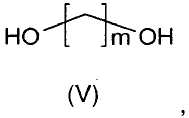 worin m 2 bis 8, bevorzugt 2 oder 3 bedeutet. Besonders bevorzugte zweiwertige Alkohole sind Glykol (1,2-Ethandiol), 1,3-Propandiol und Mischungen davon.

Besonders bevorzugte Dialdehyde, Aldehydketone und Acetale von Dialdehyden, Diketonen, Aldehydketonen, von denen sich die wenigstens eine vernetzende Struktureinheit (Komponente C) in dem erfindungsgemäßen Polymerblend ableitet, sind ausgewählt aus der im Folgenden dargestellten Gruppe

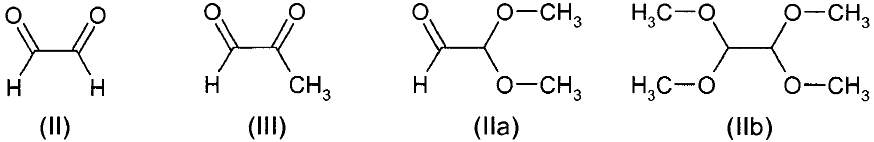

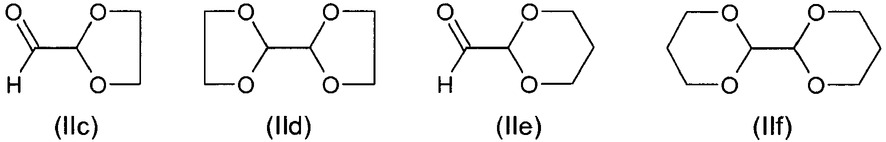

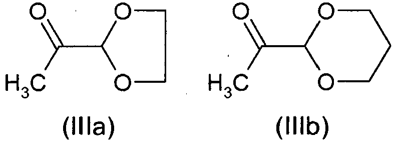

Weitere erfindungsgemäß einsetzbare Derivate von Dialdehyden, Diketonen, Aldehydketonen sind Harnstoffaddukte oder Di-alkyl-harnstoffaddukte, beispielsweise Dimethylharnstoff, an diese Verbindungen, beispielsweise Harnstoffaddukte des Glyoxals bzw. von Methylglyoxal oder Adukte von Harnstoffderivaten, wie Dimethylharnstoff mit Glyoxal oder Methylglyoxal, mit ein oder zwei Äquivalenten Harnstoff bzw. Dimethylharnstoff, wie Verbindungen der folgenden Formeln (VIa) bis (VIk) und (VIm)

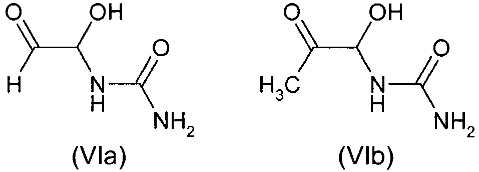

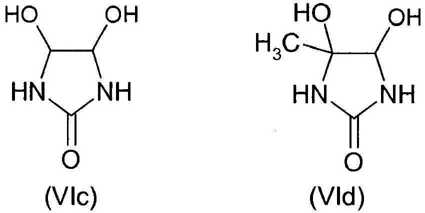

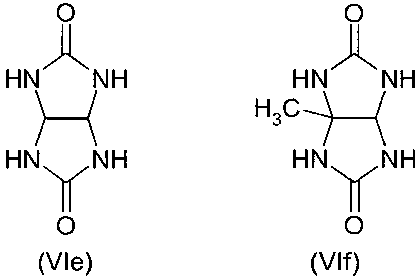

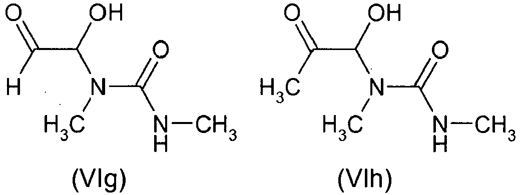

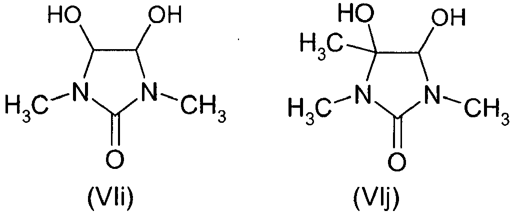

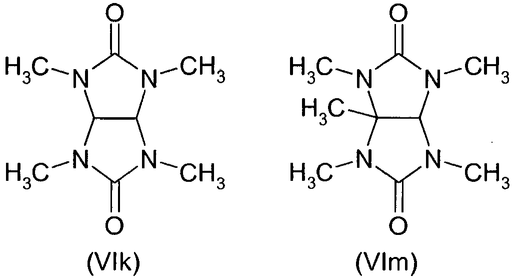

Weitere geeignete Derivate sind beispielsweise Glyoxal- oder Methylglyoxalharze, wie Dimethylol-1,3-dihyrdoxy-4,5-imidazolidinon (DMDHEU).

Daher ist erfindungsgemäß ein Polymerblend bevorzugt, wobei sich Komponente C von Harnstoff- oder Di-alkylharnstoff-derivaten von Dialdehyden, Diketonen, Aldehydketonen oder Mischungen davon oder Glyoxal- oder Methylglyoxalharzen ableitet.

In einer ganz besonders bevorzugten Ausführungsform leitet sich Komponente C von Glyoxal, Methylglyoxal oder einer Mischung davon ab.

In einer weiteren bevorzugten Ausführungsform enthält das erfindungsgemäße Polymerblend wenigstens einen Weichmacher. Erfindungsgemäß können alle dem Fachmann als Weichmacher für Polymerblends auf Basis von Stärke bekannten Weichmacher eingesetzt werden, beispielsweise organische Verbindungen mit mindestens einer Hydroxyl-Gruppe, bevorzugt Polyol, besonders bevorzugt Glycerol, Sorbitol, Mannitol, D-Glycose, Ethylenglycol, Polyethylenglycol, Propylenglycol oder deren Mischungen.

Das erfindungsgemäße Polymerblend enthält im Allgemeinen 10 bis 90 Gew.-%, bevorzugt 40 bis 80 Gew.-%, besonders bevorzugt 55 bis 70 Gew.-%, jeweils bezogen auf das Polymerblend, wenigstens ein hydrophobes Polymer als Komponente A.

Das erfindungsgemäß Polymerblend enthält im Allgemeinen 10 bis 90 Gew.-%, vorzugsweise 20 bis 50 Gew.-%, besonders bevorzugt 25 bis 45 Gew.-%, jeweils bezogen auf das Polymerblend, wenigstens ein hydrophiles Polymer als Komponente B .

Das erfindungsgemäße Polymerblend enthält im Allgemeinen 0,01 bis 30 Gew.-%, vorzugsweise 0,01 bis 10 Gew.%, besonders bevorzugt 0.01 bis 4 Gew.-% jeweils bezogen auf das Polymerblend, wenigstens eine vernetzende Struktureinheit als Komponente C .

Für den Fall, dass wenigstens ein Weichmacher vorliegt, liegt dieser im Allgemeinen in einer Menge von 0.5 bis 40 Gew.-%, bevorzugt 1 bis 30 Gew.-%, jeweils bezogen auf das Polymerblend, vor.

Es ist erfindungsgemäß möglich, dass weitere Additive vorliegen, beispielsweise optische Aufheller, Stabilisatoren, Antioxidantien, Antiflammmittel, Farbstoffe, Füllstoffe, Verarbeitungshilfsmittel und Mischungen davon. Diese Additive liegen in einer Menge von 0 bis 50 Gew.-%, falls vorhanden zu 1 bis 30 Gew.-%, bezogen auf das Polymer-blend, vor

Die Summe der in dem erfindungsgemäßen Polymerblend vorliegenden Komponenten beträgt in allen Fällen 100 Gew.-%.

Die vorliegende Erfindung betrifft auch ein Verfahren zur Herstellung von erfindungsgemäßen Polymerblends, umfassend die Schritte
(A) Mischen von wenigstens einem hydrophoben Polymer als Komponente A, ausgewählt aus der Gruppe bestehend aus Homopolyestern und/oder Copolyestern aus aliphatischen Dicarbonsäuren oder aromatischen Dicarbonsäuren mit einem aliphatischen Diol oder Diolgemisch mit 2 bis 18 C-Atomen mit wenigstens einem hydrophilen Polymer als Komponente B, ausgewählt aus der Gruppe bestehend aus Stärke, Cellulose, Polyvinylalkohol, Proteinen, Poly(meth)acrylamiden, Polysacchariden und Mischungen davon, um ein Polymerblend zu erhalten und
(B) Mischen des in Schritt (A) erhaltenen Polymerblends mit einer Verbindung ausgewählt aus der Gruppe bestehend aus Aldehyden, Dialdehyden, Diketonen, Aldehyd-Ketonen, Derivaten der genannten Verbindungen und Mischungen davon als Komponente D und Umsetzung, um ein Polymerblend zu erhalten.

Schritt (A) des erfindungsgemäßen Verfahrens (I) umfasst das Mischen von wenigstens einem hydrophoben Polymer als Komponente A mit wenigstens einem hydrophilen Polymer als Komponente B, um ein Polymerblend zu erhalten.

In einer bevorzugten Ausführungsform werden als wenigstens ein hydrophobes Polymer als Komponente A die oben genannten hydrophoben Polymere verwendet.

Vorzugsweise werden als wenigstens ein hydrophiles Polymer als Komponente B in dem erfindungsgemäßen Verfahren die zuvor genannten Polymere eingesetzt, ausgewählt aus der Gruppe bestehend aus Stärke, Cellulose, Polyvinylalkohol, Proteinen, Poly(meth)acrylamiden, Polysacchariden und Mischungen davon.

Bezüglich der Eigenschaften bzw. der bevorzugten Ausführungsformen der Komponenten A und B gilt das bezüglich des erfindungsgemäßen Polymerblends Gesagte.

Schritt (A) des erfindungsgemäßen Verfahrens kann bei jeder Temperatur durchgeführt werden, bei der die zu vermischenden Komponenten aufgeschmolzen und miteinander vermischt werden können, beispielsweise 20 bis 250 °C. Die Temperatur ist abhängig von den Schmelzpunkten der jeweiligen Polymeren.

Das Vermischen in Schritt (A) des erfindungsgemäßen Verfahrens kann in jeder dem Fachmann bekannten Vorrichtung erfolgen, beispielsweise in einem Extruder oder einem Kneter oder einem Rührkessel.

In Schritt (A) des erfindungsgemäßen Verfahrens werden im Allgemeinen 10 bis 90 Gew.-%, bevorzugt 40 bis 80 Gew.-%, besonders bevorzugt 55 bis 70 Gew.-%, jeweils bezogen auf die Mischung aus den Komponenten A und B, wenigstens ein hydrophobes Polymer als Komponente A, eingesetzt.

In Schritt (A) des erfindungsgemäßen Verfahrens werden im Allgemeinen 10 bis 90 Gew.-%, bevorzugt 20 bis 60 Gew.-%, besonders bevorzugt 25 bis 50 Gew.-%, jeweils bezogen auf die Mischung aus den Komponenten A und B, wenigstens ein hydrophiles Polymer als Komponente B, eingesetzt.

In Schritt (A) des erfindungsgemäßen Verfahrens können gegebenenfalls die oben genannten Additive in den entsprechenden Mengen zugegeben werden. Diese Zugabe kann aber auch oder zusätzlich in Schritt (B) erfolgen.

Schritt (B) des erfindungsgemäßen Verfahrens umfasst das Mischen des in Schritt (A) erhaltenen Polymerblends mit einer Verbindung ausgewählt aus der Gruppe bestehend aus Aldehyden, Dialdehyden, Diketonen, Aldehydketonen, Derivaten der genannten Verbindungen und Mischungen davon als Komponente D und Umsetzung, um ein Polymerblend zu erhalten.

In einer besonders bevorzugten Ausführungsform werden die Dialdehyde, Diketone, Aldehydketone, Derivate der genannten Verbindungen und Mischungen davon in Schritt (B) des erfindungsgemäßen Verfahrens eingesetzt, die bereits bezüglich des Polymerblends genannt worden sind. Insbesondere bevorzugt werden Glyoxal, Methylglyoxal, Acetale der folgenden Formeln (II), (IIa) bis (IIf), (III), (IIIa) und (IIIb) 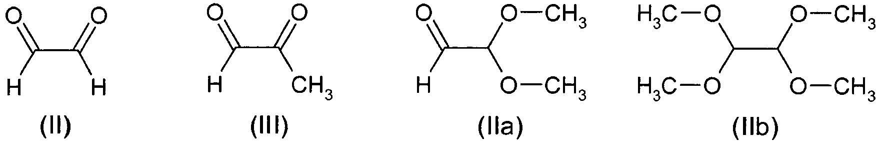 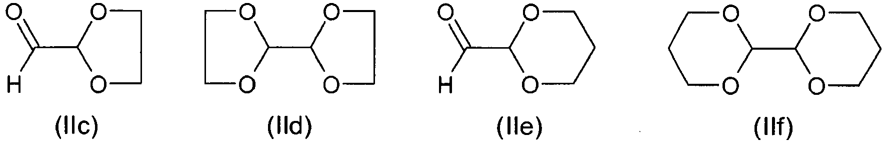 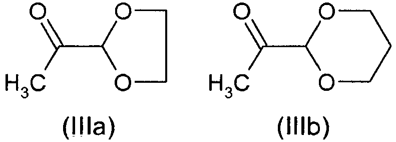 bzw. die oben genannten Harnstoff- bzw. Di-alkylharnstoff, insbesondere Dimethylharnstoff-Addukte, des Glyoxals oder Methylglyoxals als Komponente D in Schritt (B) zugesetzt.

In Schritt (B) des erfindungsgemäßen Verfahrens werden im Allgemeinen 0,01 bis 30 Gew.-%, bevorzugt 0,01 bis 10 Gew.-%, besonders bevorzugt 0.01 bis 4 Gew.-% jeweils bezogen auf die in Schritt (B) erhaltene Mischung Komponente D, eingesetzt.

Komponente D kann in Schritt (B) des erfindungsgemäßen Verfahrens in Substanz oder als Lösung zugesetzt werden. Geeignete Lösungsmittel sind dem Fachmann bekannt, beispielsweise Wasser.

Bevorzugt wird Wasser als Lösungsmittel eingesetzt. Die Konzentration der bevorzugt eingesetzten wässrigen Lösung der Komponente D, insbesondere von Glyoxal und/oder Methylglyoxal beträgt im Allgemeinen 1 bis 70 Gew.-%, bevorzugt 10 bis 60 Gew.-%, besonders bevorzugt 30 bis 50 Gew.-%.

In einer bevorzugten Ausführungsform wird das Mischen in Schritt (B) in einem Extruder durchgeführt. Die Temperatur in Schritt (B) des erfindungsgemäßen Verfahrens wird im Allgemeinen so eingestellt, dass das Polymerblend aus Schritt (A) und Komponente D miteinander mischbar sind. Bevorzugt wird Schritt (B) des erfindungsgemäßen Verfahrens bei einer Temperatur von 100 bis 220°C, besonders bevorzugt 130 bis 180°C und insbesondere bevorzugt 140 bis 170°C durchgeführt.

Es ist erfindungsgemäß möglich, dass das Polymerblend aus Schritt (A) und Komponente D gleichzeitig in die zum Mischen verwendete Vorrichtung, beispielsweise einen Extruder, gegeben werden. Bevorzugt ist jedoch, dass zunächst das Polymerblend aus Schritt (A) in einem Extruder aufgeschmolzen wird, um eine möglichst homogene Vermischung der Komponenten A und B zu erzielen. Anschließend wird dann Komponente D, bevorzugt als wässrige Lösung, zu dem geschmolzenen Polymerblend gegeben.

Die in Schritt (B) des erfindungsgemäßen Verfahrens erfolgende Umsetzung besteht im Allgemeinen in der Reaktion der funktionellen Gruppen, d. h. den Aldehyd- und/oder Ketogruppen, der Komponente D mit den in den Komponenten A und/oder B vorliegenden funktionellen Gruppen, insbesonders mit den in Komponente B vorliegenden Hydroxyfunktionen unter Ausbildung von Acetal-Gruppen, so dass eine Vernetzung der Komponente A und/oder B, insbesondere der Komponente B, erfolgt.

Schritt (B) wird für eine Dauer durchgeführt, die ausreichend ist, um eine möglichst gute Vermischung der einzelnen Komponenten zu gewährleisten.

Im Anschluss an Schritt (B) des erfindungsgemäßen Verfahrens können alle dem Fachmann bekannten Verfahrensschritte zur Verarbeitung und/oder Veredelung des erzeugten Polymerblends angeschlossen werden, beispielsweise Formgebung wie Ausziehen zu einer Folie oder zu einem Film.

Die vorliegende Erfindung betrifft auch ein Verfahren zur Herstellung von erfindungsgemäßen Polymerblends, umfassend die Schritte
(C) Mischen von wenigstens einem hydrophoben Polymer als Komponente A, ausgewählt aus der Gruppe bestehend aus Homopolyestern und/oder Copolyestern aus aliphatischen Dicarbonsäuren oder aromatischen Dicarbonsäuren mit einem aliphatischen Diol oder Diolgemisch mit 2 bis 18 C-Atomen mit wenigstens einem hydrophilen Polymer als Komponente B, ausgewählt aus der Gruppe bestehend aus Stärke, Cellulose, Polyvinylalkohol, Proteinen, Poly(meth)acrylamiden, Polysacchariden und Mischungen davon, um ein Polymerblend zu erhalten und
(D) Mischen des in Schritt (A) erhaltenen Polymerblends mit einer Verbindung ausgewählt aus der Gruppe bestehend aus Aldehyden, Dialdehyden, Diketonen, Aldehyd-Ketonen, Derivaten der genannten Verbindungen und Mischungen davon als Komponente D und Umsetzung, um ein Polymerblend zu erhalten.

Schritt (C) des erfindungsgemäßen Verfahrens (II) umfasst das Mischen von wenigstens einem hydrophilen Polymer als Komponente B mit einer Verbindung ausgewählt aus der Gruppe bestehend aus Aldehyden, Dialdehyden, Diketonen, Aldehydketonen, Derivaten der genannten Verbindungen und Mischungen davon und Umsetzung, um ein modifiziertes Polymer zu erhalten.

Bevorzugt wird in Schritt (C) des erfindungsgemäßen Verfahrens (II) eine Vorvernetzung durchgeführt, in der das wenigstens eine hydrophile Polymer (Komponente B) mit einer Verbindung ausgewählt aus der Gruppe bestehend aus Aldehyden, Dialdehyden, Diketonen, Aldehydketonen, Derivaten der genannten Verbindungen und Mischungen davon umgesetzt wird, um ein modifiziertes Polymer zu erhalten, welches bevorzugt vorvernetzt ist. "Vorvernetzt" bedeutet im Rahmen der vorliegenden Erfindung, dass sich in Schritt (C) bereits ein Teil der vernetzenden Struktureinheiten gebildet haben und/oder, dass zumindest eine der wenigstens zwei funktionellen Gruppen der genannten Verbindungen mit dem hydrophilen Polymer reagiert haben. Die vollständige Vernetzung findet entweder in Schritt (C) oder in Schritt (C) und in Schritt (D) statt.

Vorzugsweise werden als wenigstens ein hydrophiles Polymer als Komponente B in dem erfindungsgemäßen Verfahren die zuvor genannten Polymere eingesetzt ausgewählt aus der Gruppe bestehend aus Stärke, Cellulose, Polyvinylalkohol, Proteinen, Poly(meth)acrylamiden, Polysacchariden und Mischungen davon.

Bezüglich der Eigenschaften bzw. der bevorzugten Ausführungsformen der Komponenten B und der Aldehyde, Dialdehyde, Diketone, Aldehydketone, Derivate der genannten Verbindungen und Mischungen davon gilt das bezüglich des erfindungsgemäßen Polymerblends und des Verfahrens (I) Gesagte.

Schritt (C) des erfindungsgemäßen Verfahrens kann bei jeder Temperatur durchgeführt werden, bei der die zu vermischenden Komponenten miteinander vermischt werden können und eine Vernetzungsreaktion stattfindet, beispielsweise 20 bis 250°C.

Das Vermischen und die Umsetzung in Schritt (C) des erfindungsgemäßen Verfahrens können in jeder dem Fachmann bekannten Vorrichtung erfolgen, beispielsweise in einem Extruder oder einem Kneter oder einem Rührkessel.

In Schritt (C) des erfindungsgemäßen Verfahrens (II) werden im Allgemeinen 70 bis 99.99 Gew.-%, bevorzugt 90 bis 99.99 Gew.-%, besonders bevorzugt 95 bis 99.99 Gew.-% wenigstens ein hydrophiles Polymer (Komponente B) und 0,01 bis 30 Gew.-%, bevorzugt 0,01 bis 10 Gew.-%, besonders bevorzugt 0,01 bis 5 Gew.-%, jeweils bezogen auf die Mischung, Aldehyd, Dialdehyd, Diketon, Aldehydketon, Derivate der genannten Verbindungen und Mischungen davon, bevorzugt in wässriger Lösung, miteinander vermischt.

In Schritt (C) des erfindungsgemäßen Verfahrens können gegebenenfalls die oben genannten Additive in den entsprechenden Mengen zugegeben werden. Diese Zugabe kann aber auch oder zusätzlich in Schritt (D) erfolgen.

Die in Schritt (C) des erfindungsgemäßen Verfahrens (II) erfolgende Umsetzung besteht im Allgemeinen in der Reaktion wenigstens einer der wenigstens zwei funktionellen Gruppen, d. h. den Aldehyd- und/oder Ketogruppen, der Komponente D mit den in Komponente B vorliegenden funktionellen Gruppen, insbesonders mit den in Komponente B vorliegenden Hydroxyfunktionen unter Ausbildung von Acetal-Gruppen, so dass eine Vernetzung der Komponente B, erfolgt.

Schritt (C) wird für eine Dauer durchgeführt, die ausreichend ist, um eine möglichst gute Vermischung der einzelnen Komponenten zu gewährleisten.

Schritt (D) des erfindungsgemäßen Verfahrens umfasst das Mischen des in Schritt (C) erhaltenen modifizierten Polymers mit wenigstens einem hydrophoben Polymer A, um ein Polymerblend zu erhalten.

Bezüglich der hydrophoben Polymere (Komponente A) gilt das bezüglich des erfindungsgemäßen Polymerblends und bezüglich Verfahren (I) Gesagte.

In einer bevorzugten Ausführungsform des erfindungsgemäßen Verfahrens wird das Mischen in Schritt (D) in einem Extruder durchgeführt. Somit wird in einer bevorzugten Ausführungsform das Mischen in Schritt (B) bzw. (D) in einem Extruder durchgeführt.

Die Temperatur in Schritt (D) des erfindungsgemäßen Verfahrens wird im Allgemeinen so eingestellt, dass das modifizierte Polymer aus Schritt (C) und Komponente A miteinander mischbar sind. Bevorzugt wird Schritt (D) des erfindungsgemäßen Verfahrens bei einer Temperatur von 80 bis 220°C, besonders bevorzugt 100 bis 180°C und insbesondere bevorzugt 120 bis 170°C durchgeführt. Somit wird in einer bevorzugten Ausführungsform Schritt (B) bzw. (D) bei einer Temperatur von 80 bis 220 °C durchgeführt.

Es ist erfindungsgemäß möglich, dass das modifizierte Polymer aus Schritt (C) und Komponente A gleichzeitig in die zum Mischen verwendete Vorrichtung, beispielsweise einen Extruder, gegeben werden. Bevorzugt ist jedoch, dass zunächst Komponente A in einem Extruder aufgeschmolzen wird. Anschließend wird dann das modifizierte Polymer aus Schritt (C) zu der geschmolzenen Komponente A gegeben.

Im Anschluss an Schritt (D) des erfindungsgemäßen Verfahrens können alle dem Fachmann bekannten Verfahrensschritte zur Verarbeitung und/oder Veredelung des erzeugten Polymerblends angeschlossen werden, beispielsweise Formgebung wie Ausziehen zu einer Folie oder zu einem Film.

Das erfindungsgemäße Polymerblend, bevorzugt herstellbar durch die erfindungsgemäße Verfahren (I) und (11), zeichnet sich durch hervorragende mechanische Eigenschaften in Kombination mit guter Bioabbaubarkeit und Bioverträglichkeit aus

Daher betrifft die vorliegende Anmeldung auch Bauteile, Folien oder Filme, beispielsweise als Verpackungen, Tragetaschen, Mulchfilme, Abfallbeutel, enthaltend ein erfindungsgemäßes Polymerblend.

Die vorliegende Erfindung betrifft auch die Verwendung eines erfindungsgemäßen Polymerblends zur Verstellung von Bauteilen, Folien oder Filmen.

Die erfindungsgemäßen Polymerblends erhalten ihre vorteilhaften Eigenschaften durch die Verwendung von wenigstens einer Verbindung ausgewählt aus der Gruppe bestehend aus Formaldehyd, Dialdehyden, Diketonen, Aldehydketonen, Derivaten der genannten Verbindungen und Mischungen davon.

Die vorliegende Erfindung betrifft daher auch die Verwendung dieses Polymerblends zur Herstellung von Bauteilen, Folien oder Filmen und die Verwendung von wenigstens einer Verbindung ausgewählt aus der Gruppe bestehend aus Aldehyden, Dialdehyden, Diketonen, Aldehydketonen, Derivaten der genannten Verbindungen und Mischungen davon, zur Herstellung von Polymerblends, enthaltend wenigstens ein hydrophobes Polymer als Komponente A, ausgewählt aus der Gruppe bestehend aus Homopolyestern und/oder Copolyestern aus aliphatischen Dicarbonsäuren oder aromatischen Dicarbonsäuren mit einem aliphatischen Diol oder Diolgemisch mit 2 bis 18 C-Atomen und wenigstens ein hydrophiles Polymer als Komponente B, ausgewählt aus der Gruppe bestehend aus Stärke, Cellulose, Polyvinylalkohol, Proteinen, Poly(meth)acrylamiden, Polysacchariden und Mischungen davon, wobei Komponente A und/oder B vernetzt werden, gelöst.

Bezüglich der vernetzenden Reagenzien, der Komponenten A und B, deren Eigenschaften und vorteilhaften Ausgestaltungen gilt das oben Gesagte.

### Beispiele

### Beispiele 1 bis 4 und Vergleichsbeispiel 1:

- Maschine:: MIDI-Extruder 2000 (Doppelschnecke) der Firma DSM
- Rotation:: 80 U/min
- Temperatur:: alle Zonen 150°C
- Zusatzgeräte:: Schlitzdüse und Doppelwalze mit Motor zum Abziehen von Folien
- Einwaage:: jeweils 20 g

### Versuchsdurchführung:

Der aromatisch-aliphatische Co-Polyester aus Terephtalsäure, Adipinsäure und 1,4Butandiol (Ecoflex FBX 7011 der Firma BASF SE) und die Stärke (Cerestar C Drygel 03411 der Firma Cargil) werden in einem Becher vorgemischt. Die Mischung wird in den Extruder gefüllt, und nach ca. 1 min Mischzeit wird das Glyoxal bzw. Methylglyoxal zugegeben. Nach weiteren 5 min Mischzeit wird eine Folie extrudiert.

**Tabelle 1 Rezeptur der Beispiele 1-3 sowie Vergleichsbeispiel 1, alle Angaben in Gewichtsprozent.**

| | **Vgl.-Bsp. 1** | **Bsp.1** | **Bsp. 2** | **Bsp. 3** |
|---|---|---|---|---|
| Ecoflex FBX 7011 | 60 | 59,4 | 57 | 59,4 |
| Cerestar C | 40 | 39,6 | 38 | 39,6 |
| Glyoxal | - | 1 | 5 | - |
| Methylglyoxal | - | - | - | 1 |

**Tabelle 1.1 Tests zur Ausprägung der Steifigkeit (E-Modul) der Folien ergeben die folgenden Ergebnisse:**

| | **Vgl.-Bsp. 1** | **Bsp. 1** | **Bsp. 2** | **Bsp. 3** |
|---|---|---|---|---|
| **E-Modul [MPa]** | 143 | 203 | 170 | 204 |

### Beispiele 4 bis 5 und Vergleichsbeispiel 2:

| | | |
|---|---|---|
| Maschine: | ZSK30 | |
| Drehzahl: | 250 U/min | |
| Durchsatz: | variiert | |
| Temperaturprofil: | Zone 0: | Wasserkühlung |
| | Zone 1-2: | 20°C |
| | Zone 3: | 120°C |
| | Zone 4-5: | 150°C |
| | Zone 6-10: | 160°C |
| | Zone 11: | 150°C |

### Versuchsdurchführung:

Der aromatisch-aliphatische Co-Polyester aus Terephtalsäure, Adipinsäure und 1,4-Butandiol (Ecoflex FBX 7011) und ein Masterbatch aus Ecoflex und 10% Erucasäureamid (Ecoflex SL1) werden in Zone 0 über cold-feed dosiert. Die Stärke (Cerestar C Drygel 03411) und der Vernetzer werden über Seitenextruder zudosiert und überschüssiges Wasser entfernt. Der Strang wird granuliert, getrocknet und anschliessend auf einer Chill-Roll zu Folien gezogen.

**Tabelle 2 Rezeptur der Beispiele 4-5 sowie Vergleichsbeispiel 2, alle Angaben in Gewichtsprozent.**

| | **Vgl.-Bsp. 2** | **Bsp. 4** | **Bsp. 5** |
|---|---|---|---|
| **Ecoflex FBX 7011** | 68,3 | 66,59 | 63,18 |
| **Cerestar C** | 30 | 29,25 | 27,75 |
| **SL1-Batch** | 1,7 | 1,66 | 1,58 |
| **Glyoxal** | - | 1 | 3 |

**Tabelle 2.1 Tests zu den mechanischen Kenngrößen der Folien ergeben die folgenden Ergebnisse:**

| | **Vgl.-Bsp. 2** | **Bsp. 4** | **Bsp. 5** |
|---|---|---|---|
| **E-Modul [MPa]** | 80 | 165 | 138 |
| **Spannung bei Max [MPa]** | 8,26 | 16,9 | 10,4 |
| **Dehnung bei Max [%]** | 253,6 | 565,76 | 340,41 |
| **Spannung bei Bruch [MPa]** | 8,13 | 16,64 | 10,05 |
| **Dehnung bei Bruch [%]** | 258,96 | 569,86 | 349,77 |

## Patentansprüche

1. Polymerblend, enthaltend
(a) wenigstens ein hydrophobes Polymer als Komponente A, ausgewählt aus der Gruppe bestehend aus Homopolyestern und/oder Copolyestern aus aliphatischen Dicarbonsäuren oder aromatischen Dicarbonsäuren mit einem aliphatischen Diol oder Diolgemisch mit 2 bis 18 C-Atomen,
(b) wenigstens ein hydrophiles Polymer als Komponente B, ausgewählt aus der Gruppe bestehend aus Stärke, Cellulose, Polyvinylalkohol, Proteinen, Poly(meth)acrylamiden, Polysacchariden und Mischungen davon und
(c) wenigstens eine die Komponente A und/oder B vernetzende Struktureinheit, abgeleitet von wenigstens einer Verbindung ausgewählt aus der Gruppe bestehend aus Aldehyden, Dialdehyden, Diketonen, Aldehydketonen, Derivaten der genannten Verbindungen und Mischungen davon, als Komponente C.

2. Polymerblend nach einem der Anspruch 1, **dadurch gekennzeichnet, dass** sich Komponente C von Dialdehyden, Diketonen, Aldehydketonen der allgemeinen Formel (I) oder Mischungen davon ableitet 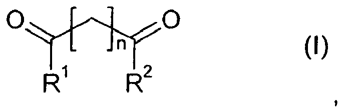 worin
R¹ und R² unabhängig voneinander Wasserstoff, C₁-C₈-Alkyl, C₂-C₈Alkenyl, C₂-C₈-Alkinyl, C₆-C₂₂-Aryl, C₆-C₂₂-Heteroaryl, C₆-C₂₂Alkylaryl, C₆-C₂₂-Alkylheteroaryl und
n 0 bis 12 bedeuten.

3. Polymerblend nach Anspruch 1 oder 2, **dadurch gekennzeichnet, dass** sich Komponente C von Harnstoff- oder Di-alkylharnstoff-derivaten von Dialdehyden, Diketonen, Aldehydketonen oder Mischungen davon oder Glyoxal- oder Methylglyoxalharzen ableitet.

4. Polymerblend nach einem der Ansprüche 1 bis 3, **dadurch gekennzeichnet, dass** es wenigstens einen Weichmacher enthält.

5. Verfahren zur Herstellung von Polymerblends gemäß einem der Ansprüche 1 bis 4, umfassend die Schritte
(A) Mischen von wenigstens einem hydrophoben Polymer als Komponente A, ausgewählt aus der Gruppe bestehend aus Homopolyestern und/oder Copolyestern aus aliphatischen Dicarbonsäuren oder aromatischen Dicarbonsäuren mit einem aliphatischen Diol oder Diolgemisch mit 2 bis 18 C-Atomen, mit wenigstens einem hydrophilen Polymer als Komponente B, ausgewählt aus der Gruppe bestehend aus Stärke, Cellulose, Polyvinylalkohol, Proteinen, Poly(meth)acrylamiden, Polysacchariden und Mischungen davon, um ein Polymerblend zu erhalten und
(B) Mischen des in Schritt (A) erhaltenen Polymerblends mit einer Verbindung ausgewählt aus der Gruppe bestehend aus Aldehyden, Dialdehyden, Diketonen, Aldehydketonen, Derivaten der genannten Verbindungen und Mischungen davon als Komponente D und Umsetzung, um ein Polymerblend zu erhalten.

6. Verfahren zur Herstellung von Polymerblends gemäß einem der Ansprüche 1 bis 4, umfassend die Schritte
(C) Mischen von wenigstens einem hydrophilen Polymer als Komponente B, ausgewählt aus der Gruppe bestehend aus Stärke, Cellulose, Polyvinylalkohol, Proteinen, Poly(meth)acrylamiden, Polysacchariden und Mischungen davon mit einer Verbindung ausgewählt aus der Gruppe bestehend aus Aldehyden, Dialdehyden, Diketonen, Aldehydketonen, Derivaten der genannten Verbindungen und Mischungen davon und Umsetzung, um ein modifiziertes Polymer zu erhalten, und
(D) Mischen des in Schritt (C) erhaltenen modifizierten Polymers mit wenigstens einem hydrophoben Polymer A, ausgewählt aus der Gruppe bestehend aus Homopolyestern und/oder Copolyestern aus aliphatischen Dicarbonsäuren oder aromatischen Dicarbonsäuren mit einem aliphatischen Diol oder Diolgemisch mit 2 bis 18 C-Atomen, um ein Polymerblend zu erhalten.

7. Verfahren nach Anspruch 5 oder 6 **dadurch gekennzeichnet, dass** das Mischen in Schritt (B) bzw. (D) in einem Extruder durchgeführt wird.

8. Verfahren nach einem der Ansprüche 5 bis 7, **dadurch gekennzeichnet, dass** Schritt (B) bzw. (D) bei einer Temperatur von 80 bis 220 °C durchgeführt wird.

9. Bauteile, Folien oder Filme enthaltend ein Polymerblend nach einem der Ansprüche 1 bis 4.

10. Verwendung eines Polymerblends nach einem der Ansprüche 1 bis 4 zur Herstellung von Bauteilen, Folien oder Filmen.

11. Verwendung von wenigstens einer Verbindung ausgewählt aus der Gruppe bestehend aus Aldehyden, Dialdehyden, Diketonen, Aldehydketonen, Derivaten der genannten Verbindungen und Mischungen davon zur Herstellung von Polymerblends enthaltend wenigstens ein hydrophobes Polymer als Komponente A, ausgewählt aus der Gruppe bestehend aus Homopolyestern und/oder Copolyestern aus aliphatischen Dicarbonsäuren oder aromatischen Dicarbonsäuren mit einem aliphatischen Diol oder Diolgemisch mit 2 bis 18 C-Atomen, und wenigstens ein hydrophiles Polymer als Komponente B, ausgewählt aus der Gruppe bestehend aus Stärke, Cellulose, Polyvinylalkohol, Proteinen, Poly(meth)acrylamiden, Polysacchariden und Mischungen davon, wobei Komponente A und/oder B vernetzt werden.

## Claims

1. A polymer blend, comprising
(a) at least one hydrophobic polymer, as component A, selected from the group consisting of homopolyesters and/or copolyesters composed of aliphatic dicarboxylic acids, or of aromatic dicarboxylic acids, with an aliphatic diol or diol mixture having from 2 to 18 carbon atoms,
(b) at least one hydrophilic polymer, as component B, selected from the group consisting of starch, cellulose, polyvinyl alcohol, proteins, poly(meth)acrylamides, polysaccharides, and mixtures thereof, and
(c) at least one structural unit that crosslinks component A and/or B and derives from at least one compound selected from the group consisting of aldehydes, dialdehydes, diketones, aldehyde ketones, derivatives of the abovementioned compounds, and mixtures thereof, as component C.

2. The polymer blend according to claim 1, wherein component C derives from dialdehydes, diketones, aldehyde ketones of the general formula (I), or a mixture thereof 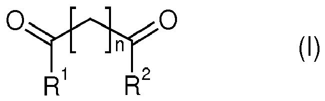 in which
R¹ and R², independently of one another, are hydrogen, C₁-C₈-alkyl, C₂-C₈-alkenyl, C₂-C₈-alkynyl, C₆-C₂₂-aryl, C₆-C₂₂-heteroaryl, C₆-C₂₂-alkylaryl, or C₆-C₂₂-alkylheteroaryl, and
n is from 0 to 12.

3. The polymer blend according to claim 1 or 2, wherein component C derives from urea derivatives or dialkylurea derivatives of dialdehydes, diketones, aldehyde ketones, or a mixture thereof, or glyoxal resins or methylglyoxal resins.

4. The polymer blend according to any of claims 1 to 3, which comprises at least one plasticizer.

5. A process for the production of polymer blends according to any of claims 1 to 4, comprising the steps of
(A) mixing of at least one hydrophobic polymer as component A, selected from the group consisting of homopolyesters and/or copolyesters composed of aliphatic dicarboxylic acids, or of aromatic dicarboxylic acids, with an aliphatic diol or diol mixture having from 2 to 18 carbon atoms, with at least one hydrophilic polymer as component B, selected from the group consisting of starch, cellulose, polyvinyl alcohol, proteins, poly(meth)acrylamides, polysaccharides, and mixtures thereof, in order to obtain a polymer blend, and
(B) mixing of the polymer blend obtained in step (A) with a compound selected from the group consisting of aldehydes, dialdehydes, diketones, aldehyde ketones, derivatives of the abovementioned compounds, and mixtures thereof, as component D, and reaction in order to obtain a polymer blend.

6. A process for the production of polymer blends according to any of claims 1 to 4, comprising the steps of
(C) mixing of at least one hydrophilic polymer as component B, selected from the group consisting of starch, cellulose, polyvinyl alcohol, proteins, poly(meth)acrylamides, polysaccharides, and mixtures thereof, with a compound selected from the group consisting of aldehydes, dialdehydes, diketones, aldehyde ketones, derivatives of the abovementioned compounds, and mixtures thereof, and reaction in order to obtain a modified polymer, and
(D) mixing of the modified polymer obtained in step (C) with at least one hydrophobic polymer A, selected from the group consisting of homopolyesters and/or copolyesters composed of aliphatic dicarboxylic acids, or of aromatic dicarboxylic acids, with an aliphatic diol or diol mixture having from 2 to 18 carbon atoms, in order to obtain a polymer blend.

7. The process according to claim 5 or 6, wherein the mixing in step (B) and, respectively, (D) is carried out in an extruder.

8. The process according to any of claims 5 to 7, wherein step (B) and, respectively, (D) is carried out at a temperature of from 80 to 220°C.

9. A component, a foil, or a film comprising a polymer blend according to any of claims 1 to 4.

10. The use of a polymer blend according to any of claims 1 to 4 for the production of components, of foils, or of films.

11. The use of at least one compound selected from the group consisting of aldehydes, dialdehydes, diketones, aldehyde ketones, derivatives of the abovementioned compounds, and mixtures thereof, for the production of polymer blends comprising at least one hydrophobic polymer, as component A, selected from the group consisting of homopolyesters and/or copolyesters composed of aliphatic dicarboxylic acids, or of aromatic dicarboxylic acids, with an aliphatic diol or diol mixture having from 2 to 18 carbon atoms, and at least one hydrophilic polymer, as component B, selected from the group consisting of starch, cellulose, polyvinyl alcohol, proteins, poly(meth)acrylamides, polysaccharides, and mixtures thereof, where component A and/or B is/are crosslinked.

## Revendications

1. Mélange polymère, contenant :
(a) au moins un polymère hydrophobe en tant que composant A, choisi dans le groupe constitué par les homopolyesters et/ou les copolyesters d'acides dicarboxyliques aliphatiques ou d'acides dicarboxyliques aromatiques avec un diol aliphatique ou un mélange de diols de 2 à 18 atomes C,
(b) au moins un polymère hydrophile en tant que composant B, choisi dans le groupe constitué par l'amidon, la cellulose, l'alcool polyvinylique, les protéines, les poly(méth)acrylamides, les polysaccharides et leurs mélanges, et
(c) au moins une unité structurale réticulant les composants A et/ou B, dérivée d'au moins un composé choisi dans le groupe constitué par les aldéhydes, les dialdéhydes, les dicétones, les aldéhyde-cétones, les dérivés des composés cités et leurs mélanges, en tant que composant C.

2. Mélange polymère selon la revendication 1, **caractérisé en ce que** le composant C dérive de dialdéhydes, de dicétones, d'aldéhyde-cétones de formule générale (I) ou leurs mélanges 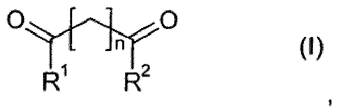
R¹ et R² signifiant indépendamment l'un de l'autre hydrogène, alkyle en C₁-C₈, alcényle en C₂-C₈, alcynyle en C₂-C₈, aryle en C₆-C₂₂, hétéroaryle en C₆-C₂₂, alkylaryle en C₆-C₂₂, alkylhétéroaryle en C₆-C₂₂, et
n signifiant 0 à 12.

3. Mélange polymère selon la revendication 1 ou 2, **caractérisé en ce que** le composant C dérive de dérivés urée ou dialkylurée de dialdéhydes, de dicétones, d'aldéhyde-cétones ou leurs mélanges ou de résines de glyoxal ou de méthylglyoxal.

4. Mélange polymère selon l'une quelconque des revendications 1 à 3, **caractérisé en ce qu'**il contient au moins un plastifiant.

5. Procédé de fabrication de mélanges polymères selon l'une quelconque des revendications 1 à 4, comprenant les étapes suivantes :
(A) le mélange d'au moins un polymère hydrophobe en tant que composant A, choisi dans le groupe constitué par les homopolyesters et/ou les copolyesters d'acides dicarboxyliques aliphatiques ou d'acides dicarboxyliques aromatiques avec un diol aliphatique ou un mélange de diols de 2 à 18 atomes C, avec au moins un polymère hydrophile en tant que composant B, choisi dans le groupe constitué par l'amidon, la cellulose, l'alcool polyvinylique, les protéines, les poly(méth)acrylamides, les polysaccharides et leurs mélanges, afin d'obtenir un mélange polymère, et
(B) le mélange du mélange polymère obtenu à l'étape (A) avec un composé choisi dans le groupe constitué par les aldéhydes, les dialdéhydes, les dicétones, les aldéhyde-cétones, les dérivés des composés cités et leurs mélanges, en tant que composant D, et la mise en réaction, afin d'obtenir un mélange polymère.

6. Procédé de fabrication de mélanges polymères selon l'une quelconque des revendications 1 à 4, comprenant les étapes suivantes :
(C) le mélange d'au moins un polymère hydrophile en tant que composant B, choisi dans le groupe constitué par l'amidon, la cellulose, l'alcool polyvinylique, les protéines, les poly(méth)acrylamides, les polysaccharides et leurs mélanges, avec un composé choisi dans le groupe constitué par les aldéhydes, les dialdéhydes, les dicétones, les aldéhyde-cétones, les dérivés des composés cités et leurs mélanges, et la mise en réaction, afin d'obtenir un polymère modifié, et
(D) le mélange du polymère modifié obtenu à l'étape (C) avec au moins un polymère hydrophobe A, choisi dans le groupe constitué par les homopolyesters et/ou les copolyesters d'acides dicarboxyliques aliphatiques ou d'acides dicarboxyliques aromatiques avec un diol aliphatique ou un mélange de diols de 2 à 18 atomes C, afin d'obtenir un mélange polymère.

7. Procédé selon la revendication 5 ou 6, **caractérisé en ce que** le mélange à l'étape (B) ou (D) est réalisé dans une extrudeuse.

8. Procédé selon l'une quelconque des revendications 5 à 7, **caractérisé en ce que** l'étape (B) ou (D) est réalisée à une température de 80 à 220 °C.

9. Composants, feuilles ou films contenant un mélange polymère selon l'une quelconque des revendications 1 à 4.

10. Utilisation d'un mélange polymère selon l'une quelconque des revendications 1 à 4 pour la fabrication de composants, de feuilles ou de films.

11. Utilisation d'au moins un composé choisi dans le groupe constitué par les aldéhydes, les dialdéhydes, les dicétones, les aldéhyde-cétones, les dérivés des composés cités et leurs mélanges, pour la fabrication de mélanges polymères contenant au moins un polymère hydrophobe en tant que composant A, choisi dans le groupe constitué par les homopolyesters et/ou les copolyesters d'acides dicarboxyliques aliphatiques ou d'acides dicarboxyliques aromatiques avec un diol aliphatique ou un mélange de diols de 2 à 18 atomes C, et au moins un polymère hydrophile en tant que composant B, choisi dans le groupe constitué par l'amidon, la cellulose, l'alcool polyvinylique, les protéines, les poly(méth)acrylamides, les polysaccharides et leurs mélanges, les composants A et/ou B étant réticulés.
